# EUROPEAN PATENT SPECIFICATION

(11) **EP 2 395 759 B1**
(45) Date of publication and mention of the grant of the patent: **04.03.2015**
(21) Application number: 10165677.5
(22) Date of filing: 11.06.2010
(51) Int. Cl.: H04N 13/04, H04N 13/00

(54) **Autostereoscopic display device and method for operating an autostereoscopic display device**
Autostereoskopische Anzeigevorrichtung und Verfahren zum Betrieb einer autostereoskopischen Anzeigevorrichtung
Dispositif d'affichage autostereoscopique et procédé de fonctionnement d'un dispositif d'affichage autospectroscopique

(43) Date of publication of application: 14.12.2011
(73) Proprietor: Sony Ericsson Mobile Communications AB, 221 88 Lund (SE)
(72) Inventor: Thoresson, Johan, 41763, Göteborg (SE)
(74) Representative: Banzer, Hans-Jörg

(56) References cited:
- EP-A2- 0 724 176
- EP-A2- 1 209 508
- WO-A1-2009/136235

## Description

### Field of the invention

The present invention relates to an auto-stereoscopic display device and a method for operating an auto-stereoscopic display device for providing a three-dimensional image of a scene to a viewer, and in particular to an auto-stereoscopic display device having a viewer position determination section and to an auto-stereoscopic display device sending out images in at least two pairs of angular directions, so-called multi-view auto-stereoscopic display device.

### Background

In recent years, there has been rapid development in new display technologies, such as new displays for TV-sets and computer monitors replacing cathode ray tube (CRT) displays. Today, displays are mostly based on LCD or plasma technology. Screen sizes vary from a couple of centimeters to more than two meters with a large amount of pixels providing a much higher resolution than supported by common television signals.

To further enhance the viewer's experience, flat screens with three-dimensional (3D) display capabilities have been introduced by various techniques. For example, display devices with auto-stereoscopic displays and display systems used in conjunction with shutter glasses have been proposed to achieve a 3D effect.

Viewing a movie in 3D on a display using shutter glasses requires that the left and right eyes of the viewer are shown alternately different images in synchronization with the refresh rate of the display, while the display alternately displays different perspectives for each eye. The equipment for such 3D systems to perceive 3D images is complex and expensive and viewers are reluctant to wear bulky shutter glasses.

Auto-stereoscopic displays do not require a special type of glasses and may create 3D effects by providing slightly different images to the left and right eyes. Naturally, a good 3D effect is only perceived if the viewer's position is such that his/her left and right eyes receive different images each generated for a particular eye.

Although this technology allows in general to experience depth and to look "in between" different layers or depth by changing the viewing angle by tilting the display or moving the head to see things that were previously hidden, the visual zone is quite limited.

In detail, since the selection of different images for different eyes is based on a spatial separation of images by separate directions for different images, a large movement of the viewer leads to losing the image originally provided for the left eye and losing the image originally provided for the right eye so that no image is seen in the left eye and the image for the left eye is seen in the right eye, for example, if the viewer moved to the left. Accordingly, the visual comfort zone, i.e. the zone defined between the maximum angles of the angle range providing an auto-stereoscopic 3D effect, is small, and thus the amount of angles an object can be viewed from is small.

WO 2009/136235 A1 discloses an auto-stereoscopic display device according the preamble of claim 1.

### Disclosure of invention

The present invention provides an auto-stereoscopic display device as defined in claim 1 and a method as defined in claim 10. The dependent claims define preferred embodiments of the invention.

A novel auto-stereoscopic display device and method for operating an auto-stereoscopic display device are presented in the independent claims. Advantageous embodiments are defined in the dependent claims.

An embodiment of the invention provides an auto-stereoscopic display device for providing a three-dimensional image of a scene to a viewer. The auto-stereoscopic display device comprises a viewer position determination section operable to determine a position of the viewer with respect to the display device and the display section operable to send out two images in at least a first pair of angular directions to confer a three-dimensional effect in a first visual comfort zone. The first pair of angular directions has a left angular direction and a right angular direction suitable for being looked at respectively by a left eye and a right eye of the viewer located in said first visual comfort zone. The display section is configured to send out two first images in the first visual comfort zone when the viewer is in a first real position in the first visual comfort zone, the two first images representing the scene under a first virtual viewing angle. The display section is configured to send out two second images in the first visual comfort zone if the viewer position determination section determines a movement of the viewer to a second real position in the first visual comfort zone. The two second images represent the scene as seen under a second virtual viewing angle larger than the first virtual viewing angle. The movement of the viewer from the first real position to the second real position defines a real viewing angle change. A difference between the first virtual viewing angle and the second virtual viewing angle defines a virtual viewing angle change, wherein the virtual viewing angle change is larger than the real viewing angle change.

Accordingly, even so the position of the viewer may change only by a small degree, e.g. from the normal (an axis perpendicular to the display section) to the display section, the scene is perceived by the viewer as if the viewer were looking at the scene in a second viewing direction under a second angle larger than the actual viewing angle between the viewer and the display section. Therefore, when the viewing angle is changed by a movement of the viewer, the images provided to the eyes may be images corresponding to an even larger viewing angle, i.e. a virtual viewing angle, than the actual viewing angle after movement so that the 3D effect can be exaggerated and the experienced visual comfort zone can be virtually extended. For example, a viewer looking perpendicularly on the display section receiving two images in a first pair of angular directions moves by 4° to the left and experiences a virtual viewing angle corresponding to a 6° movement. Here, the visual comfort zone can be defined as a zone in which the two images sent out in the first pair of angular directions can still be seen by the left and right eyes, respectively.

In one embodiment, the difference between the second angle and the first angle is between 5% and 50%, particularly between 6% and 10%, larger than the certain angle change. Accordingly, the experienced visual comfort zone can be extended by a large degree. In particular, a perception of how the real world would look like from a position with a viewing angle not being in the visual comfort zone can be provided.

In one embodiment, the difference between the second angle and the first angle is between 1 and 15 degrees, particularly between 5 and 10 degrees, larger than the certain angle change. Accordingly, the experienced visual comfort zone can be extended by a large degree.

In one embodiment, the display section is configured to send out two images in the second pair of angular directions to confer a three-dimensional effect as if the viewer were looking at the scene in a third viewing direction under a third angle if the viewer position determination section determines a movement of the viewer with an angle change larger than the certain angle change. Accordingly, a second comfort zone can be provided corresponding to visibility of the two images sent out in the second pair of angular directions.

In one embodiment, the auto-stereoscopic display device further comprises a viewer position determination section operable to determine the position of the viewer with respect to the display device, wherein the display section is configured to send out the two images in the second pair of angular directions if said viewer position determination section determines that the viewer moved to a position associated with the second pair of angular directions. Accordingly, images do not have to be sent out continuously in the first pair of angular directions and the second pair of angular directions but it can be switched between the angular directions depending on the determined position of the viewer. This may particularly be advantageous if only one viewer is present who cannot be located at two different positions at the same time so that energy for operating the display section may be saved.

In one embodiment, the difference between the second angle and the first angle is between 5% and 50%, particularly between 6 and 10%, larger than the difference between the angle of the right angular direction of the second pair and the angle of the right angular direction of the first pair. Accordingly, the experienced visual comfort zone can be extended by a large degree.

In one embodiment, the difference between the second angle and the first angle is between 1 and 15 degrees, in particular between 5 and 10 degrees, larger than the difference between the angle of the right angular direction of the second pair and the angle of the right angular direction of the first pair. Alternatively or additionally, the difference between the second angle and the first angle is between 1 and 15 degrees, in particular between 5 and 10 degrees, larger than the difference between the angle of the left angular direction of the second pair and the angle of the left angular direction of the first pair. Accordingly, the experienced visual comfort zone can be extended by a large degree.

In one embodiment, the display section is configured to send out two images in a third pair of angular directions to confer a three-dimensional effect as if the viewer were looking at the scene in a third viewing direction under a third angle. Accordingly, a third comfort zone may be provided.

In one embodiment, the first image is sent out in the left angular direction and the second image is sent out in a right angular direction so that when the first image reaches the left eye of the viewer and the second image reaches the right eye of the viewer a three-dimensional effect is perceived by the viewer. Accordingly, a good three-dimensional effect is perceived by a viewer.

Another embodiment of the invention provides a mobile device comprising one of the auto-stereoscopic display devices described above. Accordingly, the three-dimensional experience perceived by a viewer using a mobile device, such as a mobile phone or mobile communication device may be enhanced.

Another embodiment of the invention provides a method for operating an auto-stereoscopic display device for providing a three-dimensional image of the scene to a viewer comprising the steps of sending out two images in at least a first pair of angular directions having a left angular direction and a right angular direction suitable for being looked at respectively by a left eye and a right eye of the viewer located at a particular position, the two images being sent out in the first pair of angular directions so as to confer a three-dimensional effect as if the viewer were looking at the scene in a first viewing direction under a first angle, and determining a position of the viewer with respect to the display device, and sending out two other images in the first pair of angular directions so as to confer a three-dimensional effect as if the viewer were looking at the scene in a second viewing direction under a second angle larger than the first angle, if a movement of the viewer with a certain angle change is determined, wherein the difference between the second angle and the first angle is larger than the certain angle change. Accordingly, the experienced visual comfort zone can be extended.

Another embodiment of the invention provides a method for operating an auto-stereoscopic display device for providing a three-dimensional image of a scene to a viewer, comprising the steps of sending out two images in at least a first pair of angular directions having a left angular direction and a right angular direction suitable for being looked at respectively by a left eye and a right eye of the viewer located at a particular position, the two images being sent out in the first pair of angular directions to confer a three-dimensional effect as if the viewer were looking at the scene in a first viewing direction under a first angle, and sending out two other images in a second pair of angular directions having a left angular direction and a right angular direction suitable for being looked at respectively by a left eye and a right eye of the viewer located at another particular position, the two other images being sent out in the second pair of angular directions to confer a three-dimensional effect as if the viewer were looking at the scene in a second viewing direction under a second angle, wherein the difference between the second angle and the first angle is larger than the difference between the angle of the right angular direction of the second pair and the angle of the right angular direction of the first pair and larger than the difference between the angle of the left angular direction of the second pair and the angle of the left angular direction of the first pair. Accordingly, the experienced visual comfort zone can be extended.

### Brief description of the drawings

Embodiments of the invention will be described with respect to the following appended figures.
Figure 1a illustrates an auto-stereoscopic display device and elements thereof according to an embodiment of the invention.
Figure 1b illustrates a top view of the auto-stereoscopic display device shown in Figure 1a, particularly showing angular directions of images.
Figure 1c illustrates a top view of the auto-stereoscopic display device of Figure 1a, particularly showing the second virtual viewing direction.
Figure 2a illustrates an auto-stereoscopic display device and elements thereof according to a modification of the invention.
Figure 2b illustrates a top view of the auto-stereoscopic display device shown in Figure 2a, particularly showing a first pair of angular directions and a second pair of angular directions.
Figure 2c illustrates a top view of the auto-stereoscopic display device of Figure 2a, particularly showing the second virtual viewing direction.
Figure 3 illustrates a flow diagram of a method for operating an auto-stereoscopic display device according to an embodiment of the invention.
Figure 4 illustrates a flow diagram of a method for operating an auto-stereoscopic display device according to the modification of the invention.

### Description of the embodiments

Embodiments of the invention are described with reference to the figures and should serve to provide the skilled person with a better understanding of the invention. It is noted that the following description contains examples only and should not be construed as limiting the invention.

In the following, similar or same reference signs indicate similar or same elements.

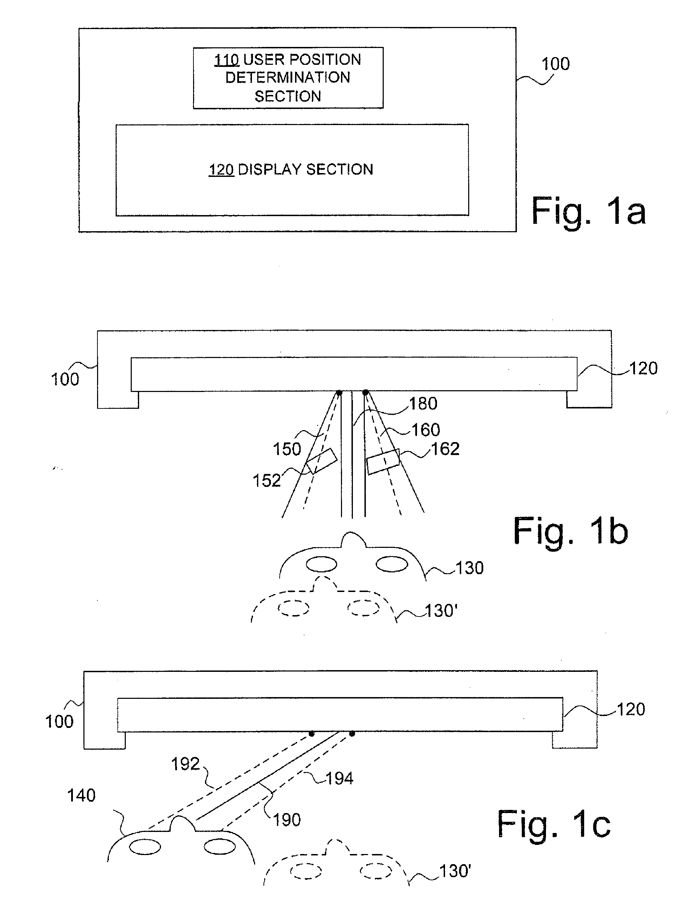

Figure 1A illustrates elements of an auto-stereoscopic display device, which will be called in the following simply display device, according to an embodiment of the invention. Figure 1A illustrates a display device 100 comprising a user position determination section 110 and a display section 120.

The viewer position determination section 110 is a determination section adapted to determine the position of a viewer with respect to the display device 100. In a common use case, the viewer is positioned in front of the display section 120 and watches images on the display section 120, such as a scene of a movie or website or other information displayed on the display section 120.

The display section 120 has stereoscopic capabilities, that is at least two different images are projected, namely an image for a right eye and an image for a left eye of the viewer. To perceive a three-dimensional effect, the position of the viewer is important who has to receive the image for the left eye in his/her left eye and the image for the right eye in his/her right eye.

The display section 120 may comprise a display with a large amount of pixels, e.g. 100,000 pixels, wherein the light of the pixels is not all directed in the same direction. The pixels may be based on liquid crystal technology so that the display section itself is based on an LCD display, wherein the direction of the light emitted by the display can be altered depending on optical elements placed on top of the LCD display, such as vertical lenses.

Auto-stereoscopic displays are known in general and work, for example, with vertical lenses on which several columns of parts of left and right images are projected, whereas the vertical lenses are arranged so that a column with a part of the left image is sent out by the display section in a different angle than a neighboring column providing a part of the right image. If the viewer is placed at a suitable position to obtain a three-dimensional effect, the viewer will receive the columns representing parts of the left image for the left eye as a complete left image in the left eye and in the same way the columns of parts of the right image for the right eye so as to obtain an auto-stereoscopic effect. Several other constructions of auto-stereoscopic displays are known to the skilled person and the invention is not limited to a special construction of an auto-stereoscopic display.

Although the position of the viewer is important, there is a certain range of viewing angles from which the 3D effect can be perceived, e.g. a 3D object can be seen in a 3D image for only a limited number of viewing angles. This range, which may be called visual comfort zone, is determined based on how light from the display section 120 reaches the eyes of the viewer. In detail, as long as the left eye receives enough image information of the left image and the right eye enough image information of the right image, an auto-stereoscopic effect can be perceived. In today available auto-stereoscopic displays a range of +/- 5 to 10 degrees from the normal (perpendicular) viewing direction on the display section may be obtained.

Since in the above-described visual comfort zone the same left image for the left eye and right image for the right eye are obtained over the whole range of the visual comfort zone, the 3D image perceived by the viewer will not change once the viewer moves e.g. 5 degrees to the left in a conventional auto-stereoscopic display device. However, the display device 100 of Figure 1 comprises the viewer position determination section 110 which is able to detect such a position change, i.e. a movement of the viewer.

The viewer position determination section 110 may be an eye-tracking system or head-tracking system. For example, the eye or the head-tracking system may be constituted of a simple camera, such as a video conferencing camera available in several modern mobile phones or other electronic devices, such as laptops. By recording an image of the viewer, particularly the head of the viewer, image recognition software can be used to determine the position and movement of the position of the eyes of the viewer either directly due to the contrast between the eyes and the surrounding tissue or indirectly by determining the shape of the head of the viewer and interpolating the location of the eyes of the viewer.

Accordingly, it is possible to analyze an image of the viewer and determine his/her position, particularly eye position, with respect to the display device 100.

In one example, the viewer position determination section 110 may be constituted by an accelerometer to determine an angular acceleration of the display device. For example, if it is assumed that the auto-stereoscopic display device 100 is a part of a mobile electronic device, such as a mobile phone and the viewer looks straight on the display section 120 at a first time instance. An acceleration can be detected once the viewer slightly rotates the display device to the side to look at it from the side, i.e. from a different viewing angle, so as to enable the determination of a movement of the viewer with respect to the display device. Accordingly, there are several possibilities of how to determine a movement of the viewer with a certain angle change.

As described above, the display section 120 is an auto-stereoscopic display section that is operable to send out two images in the first pair of angular directions having a left angular direction and a right angular direction suitable for being looked at respectively by a left eye and a right eye of the viewer located at a particular position. Figure 1b schematically illustrates a viewer 130 looking at the display section 120 in a first viewing direction 180, the viewing direction being approximately determined by the nose of the viewer and the center of the display section. In this example, the first viewing direction is approximately perpendicular to the display section 120 so that a first angle, an angle measured with respect to the normal of the display section, is assumed to be approximately zero degrees.

The left angular direction is indicated by reference numeral 150 and the right angular direction is indicated by reference numeral 160. The two images 152 and 162 are just presented for illustration and constitute only small sections of image pixels received from two small parts of the display section 120. Therefore, it should be clear from Figure 1b that a three-dimensional effect cannot be obtained from any position of the viewer but only as long as both eyes of the viewer 130 receive a left image and a right image. In other words, as long as the viewer is in the comfort zone, a 3D effect can be obtained.

In Figure 1b, it can be seen that the display section 120 is configured to send out the two images or parts of two images for the left and right eye, respectively, in the first pair of angular directions 150, 160 to confer a three-dimensional effect as if the viewer were looking at a scene on the display section in a first viewing direction 180 under a first angle, here 0°.

Furthermore, it is indicated in Figure 1b by the dashed lines that the viewer 130 changes his/her position so that viewer 130' is illustrated slightly to the left from viewer 130. For viewer 130', the viewing direction has slightly changed, e.g. the angle to the normal is now 4°. In this position, the left eye of the viewer may still receive a left image from the left angular direction 150 of the first pair of angular directions and the right eye of the viewer may still receive a right image from the right angular direction 160 of the first pair of angular directions so that viewer 130' is still located in the visual comfort zone.

Since the movement of the viewer with the angle change, here 4°, can be determined by the viewer position determination section 110, the display section 120 can be instructed by the viewer position determination section 110 or other controller placed in the display device 100 to send out different images in the first pair of angular directions.

Accordingly, the display section 120 is configured to send out two other images in the first pair of angular directions to confer a three-dimensional effect as if the viewer 130' were looking at the scene in a second viewing direction under a second angle larger than the first angle. It is now possible to send out a left image for the left eye and a right image for the right eye for a viewing direction under an angle of 4° with respect to the normal leading to a three-dimensional effect the viewer would get in real life after the movement.

However, as shown in Figure 1c, the three-dimensional effect can be exaggerated, namely the two other images confer a three-dimensional effect as if the viewer were looking at the scene in a second viewing direction under a second angle larger than 4° in this example. In other words, the difference between the second angle and the first angle is larger than the angle change of 4° in this example. The second viewing direction, which is only a perceived "virtual" viewing direction, is indicated by 190 in Figure 1c, wherein viewer 140 indicates a position of a viewer at which a three-dimensional effect would normally not be obtained with an auto-stereoscopic display device if the viewer were actually located at this position, since it is out of the comfort zone.

However, the viewer 130' is provided with two images in the first pair of angular directions which in real life would correspond to another pair of angular directions 192, 194 so as to confer a three-dimensional effect as if the viewer 130' were looking at a scene in the second viewing direction 190 under a second angle larger than the first angle and larger than 4° in this example. Accordingly, the visual comfort zone can be extended, since by moving only a few degrees, images can be provided to the viewer to perceive a three-dimensional effect resulting from a position more than just a few degrees away from the normal.

For example, the difference between the second angle and the first angle is between 5% and 50% larger than the certain angle change, i.e. the change from a first position with a first viewing direction approximately overlapping with the normal and second "real" (or actual) position with a viewing direction a few degrees away from the normal, e.g. 4°. In particular, the difference between the second angle and the first angle is between 6% and 10% larger than the certain angle change. In this case, the effect of changing the viewing angle is not exaggerated very dramatically so that the perception of the viewer should be in correspondence with how the real world should look like from this position. Further, good noticeable effects can be achieved with 10% to 30%.

Similarly, to expressing the difference in percentages, it may also be expressed in degrees so that the difference between the second angle and the first angle is between 1 and 15 degrees, for example, particularly between 5 and 10 degrees, larger than the certain angle change.

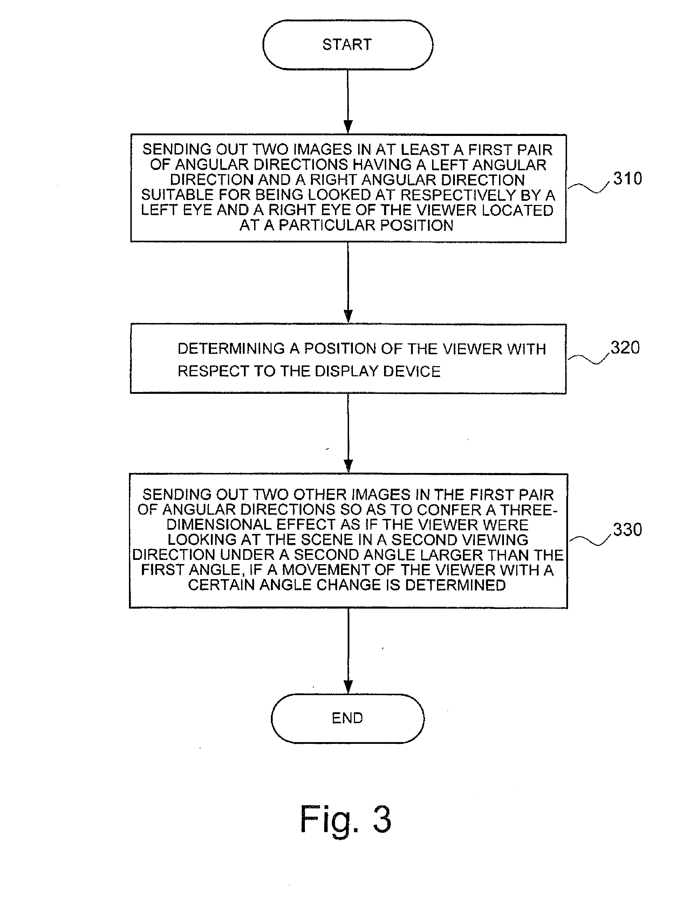

In the following, a method for operating an auto-stereoscopic display device, such as the auto-stereoscopic display device 100, will be described with respect to Figure 3.

In a first step 310 two images are sent out in at least a first pair of angular directions having a left angular direction and a right angular direction suitable for being looked at respectively by a left eye and a right eye of the viewer located at a particular position. As described above, the two images are sent out in said first pair of angular directions so as to confer a three-dimensional effect as if the viewer were looking at the scene in a first viewing direction under a first angle.

In a second step 320 a position of the viewer with respect to the display device is determined, and two other images are sent out in the first pair of angular directions in the next step 330 so as to confer a three-dimensional effect as if the viewer were looking at the scene in a second viewing direction under a second angle larger than the first angle, if a movement of the viewer with a certain angle change is determined, wherein the difference between said second angle and said first angle is larger than said certain angle change.

Furthermore, in another embodiment, the display section 120 may be configured to send out two images in a second pair of angular directions to confer a three-dimensional effect as if the viewer were looking at the scene in a third viewing direction under a third angle if the viewer position determination section determines a movement of the viewer with an angle change larger than the certain angle change, and particularly larger than the first visual comfort zone.

Such display sections having more than one pair of angular directions and thus also more comfort zones, are commonly referred to as multi-view auto-stereoscopic displays and will be described in the following.

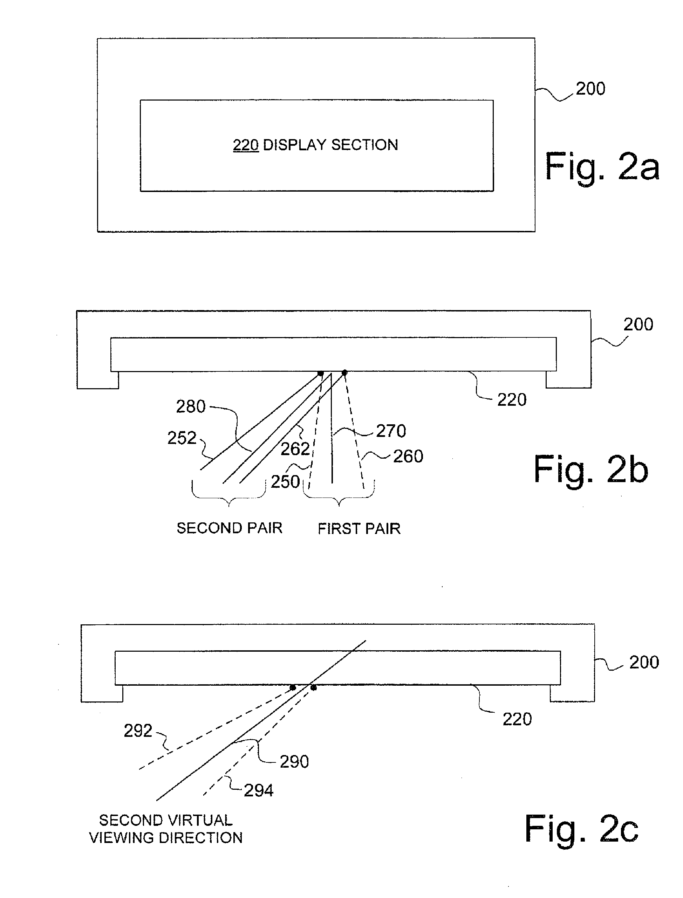

Figure 2a describes another example of an auto-stereoscopic display device for providing a three-dimensional image of a scene to a viewer.

The auto-stereoscopic display device, which will be referred to in the following as display device, is a display device 200 with a display section 220. The display section 220 is largely similar to the display section 120 and it is referred to the previous discussion to avoid unnecessary repetition. One difference between the display section 220 and the display section 120 is that the display section 220 is a multi-view auto-stereoscopic display section, that is in addition to a first pair of angular directions having a left angular direction and a right angular direction indicated by 250 and 260, respectively, the display section is operable to send out images also in a second pair of angular directions, a left angular direction 252 and a right angular direction 262 as shown in Figure 2b.

In detail, as illustrated in Figure 2b, the display section is operable to send out images in a first pair of angular directions having a left angular direction 250 and a right angular direction 260 and a second pair of angular directions having a left angular direction 252 and a right angular direction 262 suitable for being looked at respectively by a left eye and a right eye of the viewer. A viewer is not illustrated in Figures 2b and 2c but the principles in the function of auto-stereoscopic devices to obtain a three-dimensional effect is the same as described above. The difference in the display device 200 of Figure 2b is that two viewers may look at a scene on the display section 220 at the same time from different positions or the same viewer may move from the first comfort zone constituted by the first pair of angular directions to the second comfort zone constituted by the second pair of angular directions.

In more detail, the display section 220 is configured to send out two images in the first pair of angular directions 250, 260 to confer a three-dimensional effect as if the viewer located at a particular position were looking at the scene in a first viewing direction 270 under a first angle. In the example of Figure 2b, it is again assumed that the first viewing direction 270 approximately corresponds to the normal, i.e. a perpendicular line to the display section 220, of the display device 200 so that the first angle is approximately 0° with respect to the normal.

The display section 220 is further configured to send out two other images in the second pair of angular directions to confer a three-dimensional effect as if the viewer located at another particular position were looking at the scene in a second viewing direction under a second angle. This other particular position will be referred as a second virtual position, since it does not correspond to the real second position which is the position at which the left angular direction 252 of the second pair reaches the left eye and the right angular direction 262 of the second pair reaches the right eye of the viewer. In other words, the two other images provided in the left and right angular directions 252, 262 of the second pair of angular directions are images corresponding to a second viewing direction 290 of Fig. 2c under a second angle which is larger than the real angle of the actual viewing direction 280 of the real second position.

Therefore, the second viewing direction may be considered as a second "virtual" viewing direction, and the viewer at the real second position is provided with an exaggerated three-dimensional effect, namely an effect that would normally only be achieved from a second viewing direction with a second angle larger than the actual angle at the real second position. Similar to the above, when the real second position is assumed to be on an axis 20 degrees from the normal, images for the left and the right eye may be presented to the viewer that represent images 30 degrees from the normal.

This presentation of an exaggerated three-dimensional image may be expressed differently, namely that the difference between the second angle and the first angle is larger than the difference between the angle of the right angular direction of the second pair and the angle of the right angular direction of the first pair and larger than the difference between the angle of the left angular direction of the second pair and the angle of the left angular direction of the first pair. Here, the left and right angular directions are real angular directions between the display section 220 and the viewer, whereas the second viewing direction is a second virtual viewing direction 290 represented in Figure 2c. All real angles are assumed to be measured between the normal and the actual ("real") viewing direction 270 or 280.

Similar to the display device 100, the display device 200 may also be provided with a viewer position determination section operable to determine the position of the viewer with respect to the display device in the same way as described above and thus it is referred to the above description for details.

Accordingly, the display device 200 may determine whether the viewer is positioned at the first or the second position receiving the first pair or second pair of angular directions in his eyes and accordingly the other pair not reaching the viewer's eyes may be switched off. Therefore, not all pixels of the display section have to be operating and this energy may be saved. For example, if the viewer is at the second position, the display section only sends out the two images in the second pair of angular directions 252, 262.

Also, as described above, the difference between the second angle and the first angle may be between 5% and 50%, particularly between 6% and 10%, larger than the difference between the angle of the right angular direction of the second pair and the angle of the right angular direction of the first pair. Further, similar to the above, the difference between the second angle and the first angle may be between 5 and 15 degrees, particularly between 6 and 10 degrees, larger than said difference between the angle of the right angular direction of the second pair and the angle of the right angular direction of said first pair.

In another example, the display section is configured to send out two other images in a third pair of angular directions to confer a three-dimensional effect as if the viewer were looking at the scene in a third viewing direction under a third angle. In this way, a third position can be defined in which the viewer also receives images from the auto-stereoscopic display device 200.

In all embodiments a first image is sent out in the left angular direction and a second image is sent out in a right angular direction so that when the first image reaches the left eye of the viewer and the second image reaches the right eye of the viewer a three-dimensional effect is perceived by the viewer. Further, in each embodiment, once the position of the viewer is changed from a position on an axis perpendicular to the display section, the viewer may be provided with other images exaggerating the effect of the viewing angle change. This may be particularly advantageous for small displays of hand-held electronic devices in which the viewing angles are already limited by the small size of the display so that a small change in the viewing angle leads to the perception of seeing a three-dimensional image from a larger viewing angle thus enhancing the 3D effect.

Consequently, incorporating the display device 100 or 200 in a mobile device, such as a mobile communication device is particularly advantageous.

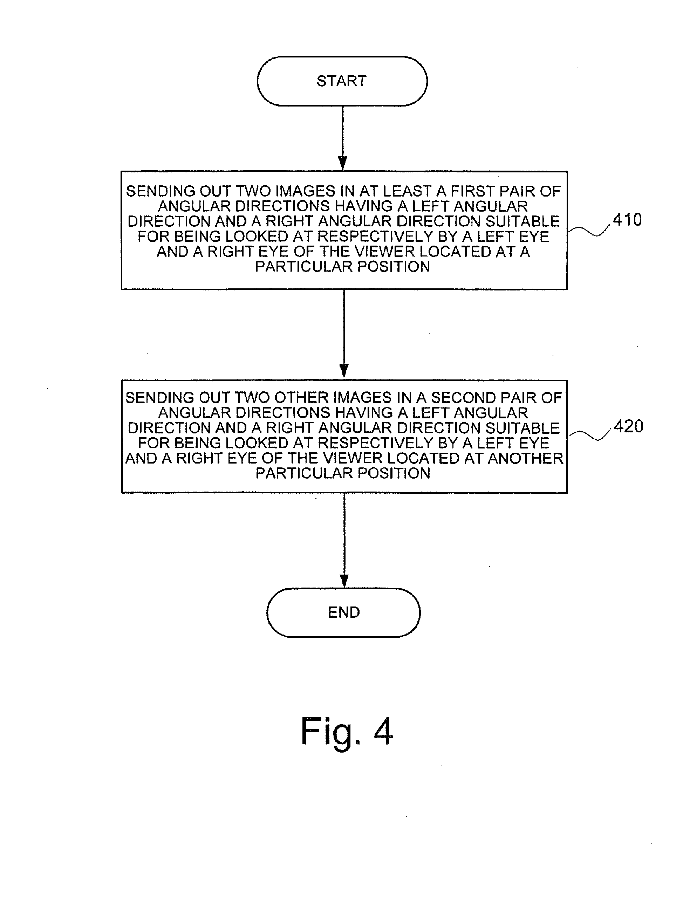

In the following, a method for operating an auto-stereoscopic display device for providing a three-dimensional image of a scene to a viewer is described with respect to Fig. 4 and an operation of the auto-stereoscopic display device 200.

In a first step 410, two images are sent out in at least a first pair of angular directions having a left angular direction and a right angular direction suitable for being looked at respectively by a left eye and a right eye of the viewer located at a particular position. The two images are sent out in the first pair of angular directions to confer a three-dimensional effect as if the viewer were looking at the scene in a first viewing direction under a first angle, and in a further step 420 two other images are sent out in a second pair of angular directions having a left angular direction and a right angular direction suitable for being looked at respectively by a left eye and a right eye of the viewer located at another particular position. The two other images are sent out in the second pair of angular directions to confer a three-dimensional effect as if the viewer were looking at the scene in a second viewing direction under a second angle, wherein the difference between the second angle and the first angle is larger than the difference between the angle of the right angular direction of the second pair and the angle of said right angular direction of the first pair and larger than the difference between the angle of the left angular direction of the second pair and the angle of the left angular direction of the first pair.

As indicated above, the above-described display devices may be controlled by a controller that may be adapted to carry out the steps of the above-described methods. The invention also relates to a computer program for carrying out the above-described method steps and to a computer readable medium storing the computer programs for carrying out the method according to the invention.

It will be appreciated that various modifications and variations can be made in the described elements, display devices, mobile devices and methods as well as in the construction of this invention without departing from the scope or spirit of the invention. The invention has been described in relation to particular embodiments which are intended in all aspects to be illustrative rather than restrictive. Those skilled in the art will appreciate that many different combinations of hardware, software and firmware are suitable for practising the invention.

Moreover, other implementations of the invention will be apparent to the skilled person from consideration of the specification and practice of the invention disclosed herein. It is intended that the specification and the examples are considered as exemplary only. To this end, it is to be understood that the inventive aspects lie in less than all features of the single foregoing disclosed implementation or configuration. Thus, the true scope of the invention is indicated by the following claims.

## Claims

1. An auto-stereoscopic display device (100; 200) for providing a three-dimensional image of a scene to a viewer (130), comprising
a viewer position determination section (110) operable to determine a position of the viewer (130) with respect to said display device (100; 200), and
a display section (120; 220) operable to send out two images (152, 162) in at least a first pair of angular directions to confer a three-dimensional effect in a first visual comfort zone, said first pair of angular directions having a left angular direction (150; 250) and a right angular direction (160; 260) suitable for being looked at respectively by a left eye and a right eye of the viewer located in said first visual comfort zone,
wherein said display section (120; 220) is configured to send out two first images in said first visual comfort zone when the viewer (130) is in a first real position in said first visual comfort zone, said two first images representing said scene as seen under a first virtual viewing angle,
wherein said display section (120; 220) is configured to send out two second images in said first visual comfort zone if said viewer position determination section (110) determines a movement of the viewer (130) to a second real position in said first visual comfort zone, said two second images representing said scene as seen under a second virtual viewing angle larger than said first virtual viewing angle,
wherein the movement of the viewer (130) from said first real position to said second real position defines a real viewing angle change, and
wherein a difference, between said first virtual viewing angle and said second virtual viewing angle defines a virtual viewing angle change,
**characterized in**
**that** said virtual viewing angle change is larger than said real viewing angle change.

2. An auto-stereoscopic display device (100; 200) of claim 1, wherein said virtual viewing angle change is between 5% and 25% larger than said real viewing angle change.

3. An auto-stereoscopic display device (100; 200) of claim 1, wherein said virtual viewing angle change is between 6% and 10% larger than said real viewing angle change.

4. An auto-stereoscopic display device (100; 200) of claim 1, wherein said virtual viewing angle change is between 5 and 15 degrees larger than said real viewing angle change.

5. An auto-stereoscopic display device (100; 200) of claim 1, wherein said virtual viewing angle change is between 6 and 10 degrees larger than said real viewing angle change.

6. An auto-stereoscopic display device (100; 200) of one of claims 1 to 5, wherein
said display section (120; 220) is configured to send out two images (152, 162) in a second pair of angular directions to confer a three-dimensional effect as if the viewer (130) were looking at the scene in a third viewing direction under a third angle if said viewer position determination section (110) determines a movement of the viewer (130) with a real viewing angle change larger than first visual comfort zone.

7. An auto-stereoscopic display device (100; 200) of one of claims 1 to 6, wherein a first image is sent out in said left angular direction (150; 250) and a second image is sent out in a right angular direction (160; 260) so that when said first image reaches the left eye of said viewer (130) and said second image reaches the right eye of said viewer (130) a three-dimensional effect is perceived by said viewer (130).

8. Mobile device comprising an auto-stereoscopic display device (100; 200) of one of claims 1 to 7.

9. Mobile device of claim 8, wherein said mobile device constitutes a mobile communication device.

10. Method for operating an auto-stereoscopic display device (100; 200) for providing a three-dimensional image of a scene to a viewer (130), comprising the steps
sending (310) out two images in at least a first pair of angular directions to confer a three-dimensional effect in a first visual comfort zone, said first pair of angular directions having a left angular direction (150; 250) and a right angular direction (160; 260) suitable for being looked at respectively by a left eye and a right eye of the viewer located in said first visual comfort zone, and determining (320) a position of the viewer (130) with respect to said display device (100; 200),
sending out two first images in said first visual comfort zone where the viewer (130) is in a first real position in said first visual comfort zone, said two first images representing said scene as seen under a first virtual viewing angle, and
sending out two second images in said first visual comfort zone if said viewer position determination section (110) determines a movement of the viewer (130) to a second real position in said first visual comfort zone, said two second images representing said scene as seen under a second virtual viewing angle larger than said first virtual viewing angle,
wherein the movement of the viewer (130) from said first real position to said second real position defines a real viewing angle change, and
wherein a difference between said first virtual viewing angle and said second virtual viewing angle defines a virtual viewing angle change,
**characterized in that**
said virtual viewing angle change is larger than said real viewing angle change.

## Patentansprüche

1. Autostereoskopische Anzeigevorrichtung (100.; 200) zur Bereitstellung eines dreidimensionalen Bildes einer Szene für einen Betrachter (130), umfassend
einen Abschnitt (110) zur Bestimmung einer Betrachterposition, der ausgestaltet ist, eine Position des Betrachters (130) in Bezug zur Anzeigevorrichtung (100; 200) zu bestimmen, und
einen Anzeigeabschnitt (120; 220), der ausgestaltet ist, zwei Bilder (152, 162) in mindestens ein erstes Paar Winkelrichtungen zu senden, um einen dreidimensionalen Effekt in einer ersten visuellen Komfortzone zu erzeugen, wobei das erste Paar Winkelrichtungen eine linke Winkelrichtung (150; 250) und eine rechte Winkelrichtung (160; 260) aufweist, die geeignet sind, durch ein linkes Auge bzw. durch ein rechtes Auge des Betrachters betrachtet zu werden, der sich in der ersten visuellen Komfortzone befindet,
wobei der Anzeigeabschnitt (120; 220) eingerichtet ist, zwei erste Bilder in die erste visuelle Komfortzone zu senden, wenn der Betrachter (130) in einer ersten realen Position in der ersten visuellen Komfortzone ist, wobei die zwei ersten Bilder die Szene so repräsentieren, wie sie unter einem ersten virtuellen Betrachtungswinkel gesehen wird,
wobei der Anzeigeabschnitt (120; 220) eingerichtet ist, zwei zweite Bilder in die erste visuelle Komfortzone zu senden, wenn der Abschnitt (110) zur Bestimmung einer Betrachterposition eine Bewegung des Betrachters (130) zu einer zweiten realen Position in der ersten visuellen Komfortzone feststellt, wobei die zwei zweiten Bilder die Szene repräsentieren, so wie sie unter einem zweiten virtuellen Betrachtungswinkel gesehen wird, der größer als der erste virtuelle Betrachtungswinkel ist,
wobei die Bewegung des Betrachters (130) aus der ersten realen Position zu der zweiten realen Position eine Änderung eines realen Betrachtungswinkels definiert, und
wobei eine Differenz zwischen dem ersten virtuellen Betrachtungswinkel und dem zweiten virtuellen Betrachtungswinkel eine Änderung des virtuellen Betrachtungswinkels definiert,
**dadurch gekennzeichnet, dass**
die Änderung des virtuellen Betrachtungswinkels größer als die Änderung des realen Betrachtungswinkels ist.

2. Autostereoskopische Anzeigevorrichtung (100; 200) nach Anspruch 1, wobei die Änderung des virtuellen Betrachtungswinkels zwischen 5 % und 25 % größer als die Änderung des realen Betrachtungswinkels ist.

3. Autostereoskopische Anzeigevorrichtung (100; 200) nach Anspruch 1, wobei die Änderung des virtuellen Betrachtungswinkels zwischen 6 % und 10 % größer als die Änderung des realen Betrachtungswinkels ist.

4. Autostereoskopische Anzeigevorrichtung (100; 200) nach Anspruch 1, wobei die Änderung des virtuellen Betrachtungswinkels zwischen 5 und 15 Grad größer als die Änderung des realen Betrachtungswinkels ist.

5. Autostereoskopische Anzeigevorrichtung (100; 200) nach Anspruch 1, wobei die Änderung des virtuellen Betrachtungswinkels zwischen 6 und 10 Grad größer als die Änderung des realen Betrachtungswinkels ist.

6. Autostereoskopische Anzeigevorrichtung (100; 200) nach einem der Ansprüche 1 bis 5, wobei
der Anzeigeabschnitt (120; 220) eingerichtet ist, zwei Bilder (152, 162) in ein zweites Paar Winkelrichtungen zu senden, um einen dreidimensionalen Effekt zu erzeugen, als ob der Betrachter (130) die Szene in einer dritten Betrachtungsrichtung unter einem dritten Winkel anschauen würde, wenn der Abschnitt (110) zur Bestimmung einer Betrachterposition eine Bewegung des Betrachters (130) mit einer Änderung des realen Betrachtungswinkels bestimmt, die größer als die erste visuelle Komfortzone ist.

7. Autostereoskopische Anzeigevorrichtung (100; 200) nach einem der Ansprüche 1 bis 6, wobei ein erstes Bild in die linke Winkelrichtung (150; 250) gesendet wird und ein zweites Bild in eine rechte Winkelrichtung (160; 260) gesendet wird, so dass, wenn das erste Bild das linke Auge des Betrachters (130) erreicht und das zweite Bild das rechte Auge des Betrachters (130) erreicht, ein dreidimensionaler Effekt durch den Betrachter (130) wahrgenommen wird.

8. Mobile Vorrichtung, umfassend eine autostereoskopische Anzeigevorrichtung (100; 200) nach einem der Ansprüche 1 bis 7.

9. Mobile Vorrichtung nach Anspruch 8, wobei die mobile Vorrichtung eine mobile Kommunikationsvorrichtung bildet.

10. Verfahren zum Betätigen einer autostereoskopisches Anzeigevorrichtung (100; 200) zum Bereitstellen eines dreidimensionalen Bildes einer Szene für einen Betrachter (130), umfassend die Schritte
Senden (310) von zwei Bildern in mindestens ein Paar Winkelrichtungen, um einen dreidimensionalen Effekt in einer ersten visuellen Komfortzone zu erzeugen, wobei das erste Paar Winkelrichtungen eine linke Winkelrichtung (150; 250) und eine rechte Winkelrichtung (160; 260) aufweist, die geeignet sind, durch ein linkes Auge bzw. durch ein rechtes Auge des Betrachters betrachtet zu werden, der sich in der ersten visuellen Komfortzone befindet, und
Bestimmen (320) einer Position des Betrachters (130) in Bezug auf die Anzeigevorrichtung (100; 200),
Senden von zwei ersten Bildern in die erste visuelle Komfortzone, wo der Betrachter (130) in einer ersten realen Position in der ersten visuellen Komfortzone ist, wobei die zwei ersten Bilder die Szene repräsentieren, so wie sie unter einem ersten virtuellen Betrachtungswinkel gesehen wird, und
Senden von zwei zweiten Bildern in die erste visuelle Komfortzone, wenn der Abschnitt (110) zur Bestimmung einer Betrachterposition eine Bewegung des Betrachters (130) zu einer zweiten realen Position in der ersten visuellen Komfortzone feststellt, wobei die zwei zweiten Bilder die Szene repräsentieren, so wie sie unter einem zweiten virtuellen Betrachtungswinkel gesehen wird, der größer als der erste virtuelle Betrachtungswinkel ist,
wobei die Bewegung des Betrachters (130) aus der ersten realen Position zu der zweiten realen Position eine reale Änderung des Betrachtungswinkels definiert, und
wobei eine Differenz zwischen dem ersten virtuellen Betrachtungswinkel und dem zweiten virtuellen Betrachtungswinkel eine Änderung des virtuellen Betrachtungswinkels definiert,
**dadurch gekennzeichnet, dass**
die Änderung des virtuellen Betrachtungswinkels größer als die Änderung des realen Betrachtungswinkels ist.

## Revendications

1. Dispositif d'affichage autostéréoscopique (100 ; 200) pour fournir une image tridimensionnelle d'une scène à un spectateur (130), comprenant :
une section de détermination de position de spectateur (110) pouvant fonctionner pour déterminer une position du spectateur (130) par rapport audit dispositif d'affichage (100 ; 200), et
une section d'affichage (120 ; 220) pouvant fonctionner pour envoyer deux images (152, 162) dans au moins une première paire de directions angulaires afin de conférer un effet tridimensionnel dans une première zone de confort visuel, ladite première paire de directions angulaires ayant une direction angulaire gauche (150 ; 250) et une direction angulaire droite (160 ; 260) appropriées pour être regardées respectivement par un oeil gauche et un oeil droit du spectateur positionné dans ladite première zone de confort visuel,
dans lequel ladite section d'affichage (120 ; 220) est configurée pour envoyer deux premières images dans ladite première zone de confort visuel lorsque le spectateur (130) est dans une première position réelle dans ladite première zone de confort visuel, lesdites deux premières images représentant ladite scène telle qu'observée sous un premier angle d'observation virtuel,
dans lequel ladite section d'affichage (120 ; 220) est configurée pour envoyer deux secondes images dans ladite première zone de confort visuel si ladite section de détermination de position de spectateur (110) détermine un mouvement du spectateur (130) dans une seconde position réelle dans ladite première zone de confort visuel, lesdites deux secondes images représentant ladite scène telle qu'observée sous un second angle d'observation virtuel supérieur audit premier angle d'observation virtuel,
dans lequel le mouvement du spectateur (130) de ladite première position réelle à ladite seconde position réelle définit un changement d'angle d'observation réel, et
dans lequel une différence entre ledit premier angle d'observation virtuel et ledit second angle d'observation virtuel définit un changement d'angle d'observation virtuel,
**caractérisé en ce que**
ledit changement d'angle d'observation virtuel est supérieur audit changement d'angle d'observation réel.

2. Dispositif d'affichage autostéréoscopique (100 ; 200) selon la revendication 1, dans lequel ledit changement d'angle d'observation virtuel est supérieur de 5 % et 25 % par rapport audit changement d'angle d'observation réel.

3. Dispositif d'affichage autostéréoscopique (100 ; 200) selon la revendication 1, dans lequel ledit changement d'angle d'observation virtuel est supérieur de 6 % à 10 % par rapport audit changement d'angle d'observation réel.

4. Dispositif d'affichage autostéréoscopique (100 ; 200) selon la revendication 1, dans lequel ledit changement d'angle d'observation virtuel est supérieur de 5 et 15 degrés par rapport audit changement d'angle d'observation réel.

5. Dispositif d'affichage autostéréoscopique (100 ; 200) selon la revendication 1, dans lequel ledit changement d'angle d'observation virtuel est supérieur de 6 et 10 degrés par rapport audit changement d'angle d'observation réel.

6. Dispositif d'affichage autostéréoscopique (100 ; 200) selon l'une quelconque des revendications 1 à 5, dans lequel
ladite section d'affichage (120 ; 220) est configurée pour envoyer deux images (152, 162) dans une seconde paire de directions angulaires afin de conférer un effet tridimensionnel comme si le spectateur (130) regardait la scène dans une troisième direction d'observation sous un troisième angle si ladite section de détermination de position de spectateur (110) détermine un mouvement du spectateur (130) avec un changement d'angle d'observation réel supérieur à la première zone de confort visuel.

7. Dispositif d'affichage autostéréoscopique (100 ; 200) selon l'une des revendications 1 à 6, dans lequel une première image est envoyée dans ladite direction angulaire gauche (150 ; 250) et une seconde image est envoyée dans une direction angulaire droite (160 ; 260) de sorte que lorsque ladite première image atteint l'oeil gauche dudit spectateur (130) et ladite seconde image atteint l'oeil droit dudit spectateur (130), un effet tridimensionnel est perçu par ledit spectateur (130).

8. Dispositif mobile comprenant un dispositif d'affichage autostéréoscopique (100 ; 200) selon l'une quelconque des revendications 1 à 7.

9. Dispositif mobile selon la revendication 8, dans lequel ledit dispositif mobile constitue un dispositif de communication mobile.

10. Procédé pour actionner un dispositif d'affichage autostéréoscopique (100 ; 200) afin de fournir une image tridimensionnelle d'une scène à un spectateur (130), comprenant les étapes consistant à :
envoyer (310) deux images dans au moins une paire de directions angulaires afin de conférer un effet tridimensionnel dans une première zone de confort visuel, ladite première paire de directions angulaires ayant une direction angulaire gauche (150 ; 250) et une direction angulaire droite (160 ; 260) appropriées pour être regardées respectivement par un oeil gauche et un oeil droit du spectateur positionné dans ladite première zone de confort visuel, et
déterminer (320) une position du spectateur (130) par rapport audit dispositif d'affichage (100 ; 200),
envoyer deux premières images dans ladite première zone de confort visuel où le spectateur (130) est dans une première position réelle dans ladite première zone de confort visuel, lesdites deux premières images représentant ladite scène telle qu'observée sous un premier angle d'observation virtuel, et
envoyer deux secondes images dans ladite première zone de confort visuel si ladite la section de prédétermination de position de spectateur (110) détermine un mouvement du spectateur (130) dans une seconde position réelle dans ladite première zone de confort visuel, lesdites deux secondes images représentant ladite scène, telle qu'observée sous un second angle d'observation virtuel supérieur audit premier angle d'observation virtuel,
dans lequel le mouvement du spectateur (130) de ladite première position réelle à ladite seconde position réelle définit un changement d'angle d'observation réel, et
dans lequel une différence entre ledit premier angle d'observation virtuel et ledit second angle d'observation virtuel définit un changement d'angle d'observation virtuel,
**caractérisé en ce que**
ledit changement d'angle d'observation virtuel est supérieur audit changement d'angle d'observation réel.
